# EUROPÄISCHE PATENTSCHRIFT

(11) **EP 2 718 574 B1**
(45) Veröffentlichungstag und Bekanntmachung des Hinweises auf die Patenterteilung: **11.05.2016**
(21) Anmeldenummer: 12741004.1
(22) Anmeldetag: 01.08.2012
(51) Int. Cl.: F16B 5/02

(54) **ABSCHIRMVORRICHTUNG MIT EINEM ABSCHIRMELEMENT UND ZUMINDEST EINER TEMPERATUR- UND SCHWINGUNGSENTKOPPELTEN BEFESTIGUNGSEINRICHTUNG**
SHIELDING DEVICE HAVING A SHIELDING ELEMENT AND HAVING AT LEAST ONE TEMPERATURE- AND VIBRATION-DECOUPLED FASTENING APPARATUS
DISPOSITIF DE PROTECTION POURVU D'UN ÉLÉMENT DE PROTECTION ET D'AU MOINS UN APPAREIL DE FIXATION DÉCOUPLÉ DE LA TEMPÉRATURE ET DES VIBRATIONS

(30) Priorität: 01.08.2011 US 201161513867 P; 09.03.2012 US 201261608822 P; 20.07.2012 US 201213554686
(43) Veröffentlichungstag der Anmeldung: 16.04.2014
(73) Patentinhaber: ElringKlinger AG, 72581 Dettingen (DE)
(72) Erfinder: FRIEDOW, Thomas, Plymouth, Michigan 48170 (US); BELL, Bob, Brownstown, Michigan 48183 (US)
(74) Vertreter: Oberdorfer, Jürgen
(86) Internationale Anmeldenummer: PCT/EP2012/065048
(87) Internationale Veröffentlichungsnummer: WO 2013/017625

(56) Entgegenhaltungen:
- WO-A1-2010/102656
- DE-U1-202006 013 527

## Beschreibung

Die Erfindung betrifft eine Abschirmvorrichtung mit einem Abschirmelement und zumindest einer temperatur- und schwingungsentkoppelten Befestigungseinrichtung nach dem Oberbegriff des Anspruchs 1.

Eine derartige Abschirmvorrichtung ist aus der WO 2010/102656 A1 bekannt. Diese Schrift schlägt als Entkopplungselement ein Metalldrahtgeflecht vor, welches mittels eines vorstehenden Kragens eine Befestigungsausnehmung des Abschirmelements durchgreift. In diesem Entkopplungselement sitzt ist eine Hülse, welche als Kragenhülse ausgebildet ist. Durch die Hülse kann eine Schraube zur Befestigung der Abschirmvorrichtung gesteckt werden.

Die Schwingungsdämpfung soll das Metalldrahtgeflecht als pufferartiges lokal komprimierbares Element sicher stellen, wobei Mikrobewegungen des Abschirmelements relativ zum Befestigungspunkt (Hülse) ermöglicht sind. Gleichzeitig soll aufgrund der Metalldrahtgeflechtstruktur eine verringerte Temperaturübertragung zwischen dem Abschirmelement und einem Befestigungspartnerteil gewährleistet sein. Nachteilig ist, dass das Entkopplungselement bei der Befestigung des Abschirmelements in einem gewissen Maße verpresst werden muss. Hierdurch schwindet bei einem Metalldrahtgeflecht die elastische Komprimierbarkeit. Des Weiteren sind zur Festlegung des Metalldrahtgeflechts Befestigungseinrichtungen am Abschirmelement erforderlich, die einen erhöhten Herstellaufwand bewirken.

Des Weiteren ist das vorgeschlagene Entkopplungselement insbesondere das Befestigungsauge nicht verliersicher, so dass besondere Maßnahmen erforderlich sind, um sicher zu stellen, dass das Entkopplungselement bereits im Abschirmelement vormontiert werden kann und bis zur endgültigen Montage sich hieraus nicht lösen kann.

Aus der DE 202006013527 U1 ist eine Befestigungsvorrichtung zur Ausbildung einer gattungsgemäßen Abschirmvorrichtung bekannt.

Aufgabe der Erfindung ist es daher, eine sowohl für Schwingungen wie auch für Wärme wirksames Entkopplungselement für eine Abschirmvorrichtung, insbesondere ein Hitzeschild und/oder ein Schallabschirmelement anzugeben, welches zuverlässig funktioniert und einfach in der Herstellung ist.

Des Weiteren soll die Abschirmvorrichtung eine Befestigungsvorrichtung aufweisen, die zumindest in einer Radialrichtung frei und lediglich durch eine definierte und innerhalb des Bewegungsbereichs konstante oder nahezu konstante Verschiebekraft verschieblich bezüglich des Abschirmelements gelagert ist. Gleichzeitig soll auch eine in einer Axialrichtung toleranzausgleichende und schwingungsentkoppelte Befestigung des Abschirmelements ermöglicht sein.

In einer weiteren Aufgabenstellung soll eine besonders bevorzugte Ausführungsform der Abschirmvorrichtung an Schwingungs- und Wärmebelastungsszenarien einer bestimmten Befestigungsstelle des Abschirmelements in einfacher Art und Weise anpassbar sein.

Diese Aufgaben werden mit einer Abschirmvorrichtung mit den Merkmalen des Anspruchs 1 gelöst. Insbesondere werden die Aufgaben auch durch Merkmale der Unteransprüche gelöst.

Die Erfindung betrifft somit eine Abschirmvorrichtung mit einem Abschirmelement mit zumindest einer Befestigungseinrichtung zur Befestigung der Abschirmvorrichtung an einem Befestigungspartnerteil mit einem Befestigungsauge zur Aufnahme eines Befestigungsmittels, wobei das Befestigungsauge in einer Befestigungsausnehmung der Abschirmvorrichtung verschieblich gelagert sitzt. Die erfindungsgemäße Abschirmvorrichtung zeichnet sich dadurch aus, dass das Befestigungsauge mittels einer federnd ausgebildeten Kopplungseinrichtung in einer Axialrichtung federnd relativ zum Abschirmelement gelagert und in zumindest einer Radialrichtung reibkraftbeaufschlagt relativ zum Abschirmelement innerhalb der Befestigungsausnehmung verlagerbar ist, wobei zur Reibkrafterzeugung radial äußere Bereiche der Kopplungseinrichtung federnd vorgespannt mit Gleitzonen gegenüber liegender Außenseiten des Abschirmelements zusammenwirken. Dabei ist vorgesehen, dass die Gleitzonen aus erhabenen Bereichen der Außenseiten des Abschirmelements in der Umgebung der Befestigungsausnehmungen gebildet sind. Durch die Ausbildung der Gleitzonen als erhabene Bereiche in der direkten Umgebung um die Befestigungsausnehmungen wird erreicht, dass die Bestandteile der Kopplungseinrichtung nicht vollflächig, sondern nur lokal begrenzt auf den Außenseiten des Abschirmelements aufliegen. Hierdurch wird durch eine Verringerung der Kontaktfläche zum einen ein verminderter Wärmeübergang vom Abschirmblech in die Kopplungseinrichtung und damit hin zum Befestigungsauge und zum Befestigungspartnerteil erreicht. Zum anderen kann durch die Formgebung der erhabenen Bereiche, zum Beispiel als im Wesentlichen zinnenförmige Durchsetzungen oder als im Wesentlichen kalottenförmige Durchsetzung, Einfluss genommen werden auf die Wärme übertragende Kontaktfläche zwischen dem Abschirmelement und der Kopplungseinrichtung. Auch hierdurch kann der Wärmeübergang zwischen dem Abschirmelement und der Kopplungseinrichtung beeinflusst werden.

Das Zusammenwirken der Kopplungseinrichtung mit Gleitzonen gegenüberliegender Außenseiten des Abschirmelements kann dabei im Wege des direkten Kontakts, also unmittelbar, erfolgen. Als direkter Kontakt ist hierbei ein berührendes Anliegen radial äußerer Bereiche der Kopplungseinrichtung auf den Gleitzonen zu verstehen. Eine Zwischenschaltung einer gegebenenfalls vorhandenen Schmiermittelschicht ist als unmittelbarer direkter Kontakt, also als unmittelbares direktes Zusammenwirken der Erfindung zu verstehen.

Weiterhin ist es möglich, die radial äußeren Bereiche der Kopplungseinrichtung federnd vorgespannt mit Gleitzonen gegenüberliegender Außenseiten des Abschirmelements unter Zwischenschaltung einer Zwischenlage, also mittelbar, zusammenwirken zu lassen. Die Zwischenlage ist dabei derart ausgebildet, dass eine direkte und unmittelbare Berührung der Kopplungseinrichtung mit den Gleitzonen nicht stattfindet. Ein Beispiel für eine derartige Zwischenlage ist beispielsweise eine folienartige Metallscheibe, welche zwischen der Kopplungseinrichtung und den Gleitzonen gegenüberliegender Außenseiten des Abschirmelements angeordnet ist.

In einer besonders bevorzugten Ausführungsform besteht die Kopplungseinrichtung aus zwei Federscheiben, die mit radial inneren Enden von Federarmen in eine Nut des Befestigungsauges gelagert sind. Das Befestigungsauge weist hierfür bevorzugt eine radial umlaufende Nut auf.

In einer besonderen Ausführungsform der Erfindung ist vorgesehen, dass die Befestigungsausnehmung ein Langloch ist, in der das Befestigungsauge in zumindest einer Radialrichtung verschieblich gelagert ist und bevorzugt in einer hierzu senkrechten Radialrichtung nicht oder nur unwesentlich verschiebbar gelagert ist.

Gemäß einer weiteren Ausführungsform besitzen die Federscheiben zur Ausbildung der Kopplungseinrichtung radial äußere umlaufende Ringe, wobei im montierten Zustand die radial äußeren Ringe auf den Gleitzonen, d. h. zum Beispiel auf den erhabenen Bereichen des Abschirmelements aufliegen und somit das Abschirmelement relativ zum Befestigungsauge federvorgespannt zangenartig halten.

Bei einer besonderen Ausführungsform der Erfindung ist zwischen zumindest einem äußeren Bereich der Kopplungseinrichtung und der Gleitzone der gegenüber liegenden Außenseite des Abschirmelements eine Zwischenlage angeordnet. Insbesondere ist die Zwischenlage zwischen zumindest einer der Federscheiben und der entsprechenden Außenseite der Abschirmelements angeordnet. Durch die Verwendung einer Zwischenlage wird der durch die Reibkraft entstehende Verschleiß, insbesondere der des Abschirmelements, wesentlich verringert. Dies liegt insbesondere daran, dass durch die Zwischenlage eine größere Kontaktfläche zu dem Abschirmelement besteht, wodurch die Auswirkung der durch die Kopplungseinrichtung auf das Abschirmelement ausgeübten Federkraft vermindert und somit der Verschleiß reduziert wird.

Bevorzugt wird die Zwischenlage durch ein kreisförmiges, scheibenartiges, insbesondere ringförmiges und besonders bevorzugt kreisringförmiges Zwischenelement gebildet. Dieses Zwischenelement weist eine Öffnung auf, die ebenfalls zur Aufnahme oder Durchführung des Befestigungsmittels geeignet ist. Als besonders vorteilhaft hat sich die Verwendung einer Zwischenlage aus Edelstahl, insbesondere Edelstahl der Werkstoffnummer 1.4301 oder 1.4310, oder Federstahl erwiesen. Insbesondere bei einem Abschirmelement aus Aluminium sind diese Materialien besonders vorteilhaft hinsichtlich der Reduzierung des Verschleißes am Abschirmelement. Die Verwendung einer Zwischenlage aus anderen Materialien oder von mit einer Beschichtung versehenen Materialien ist ebenfalls möglich.

Die Zwischenlage weist eine Dicke d auf, die bevorzugt 0,01mm ≤ d ≤ 0, 5mm und besonders bevorzugt 0,05mm ≤ d ≤ 0,1mm beträgt. Es hat sich gezeigt, dass folienartige Zwischenelemente von solch geringen Dicken (0,05mm ≤ d ≤ 0,1mm) bereits ausreichen, um eine wirksame Verringerung des Verschleißes am Abschirmteil zu bewirken.

Das Zwischenelement findet bevorzugt dann Anwendung, wenn die Gleitzone aus erhabenen Bereichen der Außenseiten des Abschirmelements gebildet wird. Besonders vorteilhaft ist die Verwendung von je einer Zwischenlage pro Federscheibe, da somit der Verschleiß auf beiden Außenseiten des Abschirmteils reduziert wird.

Bei einer besonders vorteilhaften Weiterbildung ist zur Reduzierung des reibungsbedingten Verschleißes zusätzlich oder alternativ zu der Zwischenlage eine Gleitbeschichtung auf der Außenseite des Abschirmelements und/oder auf der Zwischenlage und/oder auf den Federscheiben vorgesehen. Diese Gleitbeschichtung ist bevorzugt eine MoS₂-Beschichtung. Die Verwendung von Graphit oder anderen Schmiermitteln ist jedoch ebenfalls möglich.

Gemäß einer weiteren Ausführungsform ist ein axialer Abstand a zweier zum Beispiel benachbarter erhabener Bereiche, die Gleitzonen bilden, an unterschiedlichen Befestigungspunkten des Abschirmelements unterschiedlich ausgebildet. Hierdurch kann in besonders einfacher Art und Weise die Geometrie des Abschirmbleches individuell auf die Schwingungs- und Temperaturbelastungssituation am individuell vorliegenden Befestigungspunkt ausgerichtet und entsprechend ausgelegt werden. So kann durch einen unterschiedlich großen Abstand a beim einen Befestigungspunkt gegenüber bei einem anderen Befestigungspunkt eine erhöhte federnde Vorspannung am einen gegenüber dem anderen Befestigungspunkt erreicht werden. Gleichwohl ist es selbstverständlich auch möglich, an ein und demselben Befestigungspunkt erhabene Bereiche mit unterschiedlichem Abstand a vorzusehen, sodass zum Beispiel eine in Umfangsrichtung eines Befestigungspunktes ungleichmäßig vorgespannte Kopplungseinrichtung vorliegt. Hierdurch kann beispielsweise erreicht werden, dass eine axiale Verschieblichkeit in einer Richtung mit einer erhöhten Federvorspannkraft also mit einer erhöhten hieraus resultierenden Reibkraft erfolgen kann, wohingegen in einer anderen Radialrichtung ein niedrigeres oder demgegenüber höheres Reibkraftniveau eingestellt werden kann.

Selbstverständlich kann dies auch bei in Umfangsrichtung um einen Befestigungspunkt gleichbleibendem Abstand a durch eine unterschiedliche Auslegung oder geometrische Raumform oder einer Federhärte der Federelemente erreicht werden.

Zweckmäßigerweise ist das Befestigungsauge zweiteilig aus zumindest zwei zueinander verstemmten Scheibenelementen gebildet.

Um eine definierte Lagerung des Befestigungsauges relativ zum Abschirmelement zu erreichen ist es zweckmäßig, dass die Federarme der Federscheiben sich vom radial äußeren Ring nach innen erstrecken und sich endseitig insbesondere innerhalb der Nut des Befestigungsauges berühren.

Dabei ist es besonders zweckmäßig, dass die Federarme an Begrenzungskanten, insbesondere radial äußeren Begrenzungskanten der Nut anliegen, sodass das Befestigungsauge spielfrei, insbesondere klapperfrei innerhalb des Abschirmelementes gelagert ist.

Zweckmäßigerweise ist das Befestigungsauge im Bereich der Befestigungsausnehmung in etwa in der Ebene des Abschirmelementes angeordnet, wobei zur Bildung des Kopplungselementes zwei identische Federscheiben Verwendung finden können.

Selbstverständlich ist es auch möglich, das Befestigungsauge versetzt zum Abschirmelement anzuordnen. Dies bedingt dann den Einsatz zweier unterschiedlicher Federelemente, die beispielsweise auch eine im Querschnitt gestufte Raumform aufweisen können.

Damit die Abschirmvorrichtung und insbesondere die Befestigungseinrichtung für die Abschirmvorrichtung individuell an Schwingungs- und Temperaturbelastungsfälle am jeweiligen Befestigungspunkt anpassbar ist, ist es zweckmäßig, die Federscheiben zur Bildung des Kopplungselementes hinsichtlich ihrer Raumform, insbesondere hinsichtlich der Geometrie der Federarme wie auch hinsichtlich der Materialstärke, der Federhärte und/oder der Länge der Federarme gegebenenfalls unterschiedlich auszubilden, um - wie oben bereits erwähnt - die gewünschte Variabilität und Flexibilität zur Erzeugung eines an ein Schwingungs- und/oder Temperaturbelastungsmuster angepassten Befestigungspunkt zu ermöglichen.

Des Weiteren kann durch diese Maßnahme die axial federnde Lagerung bzw. die axial federnde Nachgiebigkeit des Befestigungsauges relativ zum Abschirmelement beispielsweise in einer Richtung härter in der entgegengesetzten Richtung weicher ausgestaltet werden.

Zur Anpassung der erfindungsgemäßen Abschirmvorrichtung an einsatzspezifisch auftretende mechanische und/oder Wärmebelastungssituationen ist es zweckmäßig, die Raumform und/oder das Maß a für die Gleitzonen in Abhängigkeit einer Schwingungsanalyse/Temperaturbelastungsanalyse am jeweiligen Befestigungspunkt anzupassen. Eine derartige Schwingungsanalyse kann beispielsweise mittels Rechner gestützter Simulation erhalten werden. Gleiches gilt im Wesentlich auch für die zu erwartenden Temperaturbelastungen.

Für das Abschirmelement haben sich Abschirmbleche, beispielsweise aus Aluminium oder Stahl, die bei Bedarf ein- oder mehrlagig ausgebildet sein können, bewährt.

Wesentlich Vorteile der Erfindung sind, dass durch die in Axialrichtung federnd vorgespannte und in einer oder mehrere Radialrichtung Reibkraft beaufschlagte Lagerung des Befestigungsauges relativ zum Abschirmelement größere konstruktive Freiheiten gegeben sind und somit das Abschirmelement in einfacher Art und Weise an unterschiedliche Belastungsszenarien anpassbar ist.

Des Weiteren ist von Vorteil, dass bei der Verlagerung des Befestigungsauges innerhalb der Befestigungsausnehmung in Radialrichtung diese immer mit konstanter oder nahezu konstanter Kraft erfolgen kann, wohingegen bei der Ausbildung gemäß dem Stand der Technik welcher ein Metalldrahtgeflecht nutzt, die Verlagerung des Auges eine elastische Kompression des Metalldrahtgeflechts bewirkt, sodass die zu überwindende Kraft bei steigender Verlagerung des Befestigungsauges aus der Nulllage heraus immer größer wird.

Ein weiterer wesentlicher Vorteil der Erfindung ist, dass mit einfachen Standardbauelementen (Federscheiben mit nach innen radial vorspringenden Federarmen) und einfachen Dreh- bzw. Stanzteilen ein Befestigungspunkt der Erfindung aufbaubar ist. Dies reduziert die Kosten für Logistik, Lagerhaltung und dergleichen.

Wie vorbeschrieben ist auch ein wesentlicher Vorteil der Erfindung, dass durch einfache geometrische Anpassung, beispielsweise der Gleitzonen (insbesondere deren Abstand a zueinander) unterschiedliche Federvorspannungen für die Kopplungseinrichtungen erreichbar sind und somit die Härte der Aufhängung des Befestigungsauges relativ zum Abschirmblech in weiten Grenzen frei wählbar ist.

Ein weiterer Vorteil ist, dass die erfindungsgemäße Abschirmeinrichtung hinsichtlich ihrer Befestigungspunkte bereits bei der Herstellung derart vormontierbar ist, dass die Bestandteile der elastisch und/oder verschieblich aufgehängten Befestigungsaugen nicht mehr verlierbar sind. Auch bei einer Demontage einer erfindungsgemäßen Abschirmung, beispielsweise für Wartungs- und Reparaturzwecke besteht nicht die Gefahr, dass Einzelteile der Befestigungspunkte verloren gehen können.

Des Weiteren ist mit der erfindungsgemäßen Abschirmeinrichtung in einfacher Art und Weise möglich, Befestigungsaugen relativ zu Langlöchern im Abschirmelement zu lagern, wodurch eine verbesserte Anpassung an Montagetoleranzen, beispielsweise von Befestigungspartnerteilen möglich ist. Das Befestigungsauge ist durch die erfindungsgemäße Lagerung desselben innerhalb des Abschirmelements in einem Langloch oder in einem vergrößerten Rundloch in weiten Grenzen mit konstantem Kraftaufwand verschiebbar gelagert.

Im Folgenden wird die Erfindung anhand der Zeichnung beispielhaft näher erläutert. Es zeigen:
- Fig. 1:: eine perspektivische Ansicht auf eine Befestigungsvorrichtung mit einem Befestigungsauge einer Ausführungsform der erfindungsgemäßen Abschirmvorrichtung in einer geschnittenen Ansicht;
- Fig. 2:: die Befestigungsvorrichtung gemäß Figur 1 in einer Explosionsdarstellung;
- Fig. 3:: eine Draufsicht auf eine mögliche Umgebungsgestaltung um eine Befestigungsausnehmung eines Abschirmelements der erfindungsgemäßen Abschirmvorrichtung;
- Fig. 3a:: einen Schnitt entlang der Linie C-C aus Figur 3;
- Fig. 4:: eine Seitenansicht einer weiteren Ausführungsform der erfindungsgemäßen Abschirmvorrichtung in einer geschnittenen Ansicht;
- Fig. 5:: eine Explosionsdarstellung der Ausführungsform der Figur 4 in einer perspektivischen Ansicht.

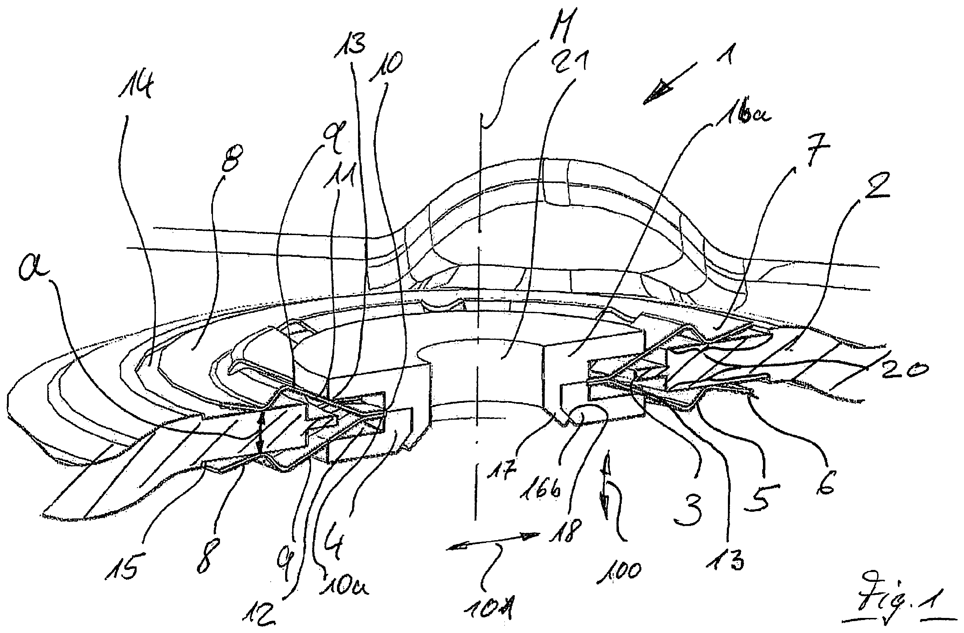

Eine erfindungsgemäße Abschirmvorrichtung 1 (Figur 1) besitzt ein Abschirmelement 2, z. B. ein Wärme- und/oder Schallabschirmelement. In einer Befestigungsausnehmung 3 des Abschirmelements 2 ist ein Befestigungsauge 4 angeordnet, welches über eine Kopplungseinrichtung 5 mit dem Abschirmelement 2 mechanisch gekoppelt ist.

Die Kopplungseinrichtung 5 besitzt eine erste Federscheibe 6 und zweite Federscheibe 7. Die erste Federscheibe 6 und die zweite Federscheibe 7 besitzen jeweils einen radial äußeren umlaufenden Federring 8, von dem sich radial nach innen auf eine Mittelachse M hinweisend eine Vielzahl von Federarmen 9 erstrecken. Die Federarme 9 besitzen an ihrem radial inneren Ende 10 freie Enden 10a. Zumindest die freien Enden 10a der Federscheiben 6, 7 berühren sich im Bereich ihres radial inneren Endes 10. Federarmschenkel 11 verbinden die freien Enden 10a der Federarme 9 mit dem jeweiligen Federring 8 der ersten oder der zweiten Federscheibe 6, 7.

Die freien Enden 10a wie auch zumindest Teile der Federarmschenkel 11 sitzen innerhalb einer Radialnut 12 des Befestigungsauges 4.

Die Radialnut 12 besitzt Nutkanten 13, welche jeweils umlaufend die Nut 12 begrenzen. Die Federarmschenkel 11 berühren bevorzugt in einem bezüglich ihrer radialen Erstreckung etwa mittigen Bereich die Nutkanten 13 der Radialnut 12 und stützen sich dort ab. Die Federringe 8 der Federscheibe 6 und der Federscheibe 7 liegen auf einer ersten Außenseite 14 bzw. einer zweiten Außenseite 15 des Abschirmelements 2 auf und stützen sich auf diesen Außenseiten 14, 15 entweder flächig oder wie in Figur 1 dargestellt linienförmig ab.

Die Auflagebereiche der Federringe 8 auf der ersten Außenseite 14 und auf der zweiten Außenseite 15 sind um einen Abstand a beabstandet voneinander angeordnet und bewirken so eine Vorspannung der Federscheiben, die sich einerseits auf den Außenseiten 14, 15, anderendig an den radial inneren Enden 10 gegenseitig und im Bereich der Federarmschenkel 11 gegenüber den Kanten 13 der Nut abstützen. Eine derartige Lagerung des Befestigungsauges 4 bewirkt eine federnd vorgespannte Lagerung in einer Axialrichtung 100 sowie eine reibkraftbeaufschlagte Lagerung in einer Radialrichtung 101. Die verschiebliche Lagerung des Befestigungsauges 4 in Radialrichtung 101 erfolgt reibkraftbeaufschlagt durch eine Reibkraft, die zwischen den Federringen 8 und der Außenseite 14 bzw. 15 entsteht.

Das Befestigungsauge 4 ist im Ausführungsbeispiel gemäß Figur 1 aus zwei Scheibenelementen 16a, 16b aufgebaut, welche zwischen sich radial außen umlaufend die Nut 12 begrenzen. Das Scheibenelement 16a besitzt einen Stemmkragen 17, welcher im zusammengebauten Zustand gegen eine Fase 18 plastisch verformend umgelegt und somit verstemmt wird.

Im Ausführungsbeispiel gemäß Figur 1 bilden die Außenseiten 14, 15 Gleitzonen 20, auf denen die Federscheiben 6, 7 mit ihren radial äußeren Federringen in Radialrichtung 101 gleiten können.

Im vorliegenden Fall handelt es sich bei der Befestigungsausnehmung 3 um ein Rundloch, welches im Durchmesser derart abgestimmt ist, dass das Befestigungsauge 4 beispielsweise in Radialrichtung etwa um +/- 1,5 mm in alle Radialrichtungen 101 verschiebbar gelagert ist. Übliche Befestigungsmittel zur Befestigung der Abschirmvorrichtung 1 mittels dem Befestigungsauge 4 sind beispielsweise Schrauben der Größe M6, welche durch die hierfür vorgesehene Lochausnehmung 21 des Befestigungsauges 4 gesteckt werden können und mit einem Befestigungspartnerteil (nicht gezeigt) verschraubt werden können.

Selbstverständlich ist es auch möglich, die Befestigungsausnehmung 3 als Langloch auszubilden, so dass in einer bevorzugten Radialrichtung 101 eine größere Bewegung möglich ist, als in einer zur bevorzugten Radialrichtung senkrecht stehenden Radialrichtung 101.

Bei der Erfindung ist von besonderem Vorteil, dass die Federscheiben 6, 7 mit ihren Federringen 8 entweder flächig oder linienförmig auf den Gleitzonen rutschen können und somit im Ergebnis das Befestigungsauge 4 zangenartig am Abschirmelement 2 festlegen. Die Festlegung erfolgt federvorgespannt in einer Richtung senkrecht auf die Außenseiten 14, 15 wodurch eine Reibkraft erzeugt wird, die innerhalb des gewünschten Verlagerungsbereiches des Befestigungsauges 4 konstant oder nahezu konstant ist.

In einer Axialrichtung 100 kann das Befestigungsauge 4 im geringen Maße federnd relativ zum Abschirmelement 2 verlagert werden, wobei bei einer Darstellung gemäß Figur 1 eine Verlagerung des Befestigungsauges 4 in Axialrichtung 100 nach oben zu einer verstärkten federnden Vorspannung oder Verspannung der ersten Federscheibe 6 und zu einer temporären Entlastung der zweiten Federscheibe 7 führt.

Zweckmäßigerweise ist die gesamte Befestigungseinrichtung bestehend aus dem Befestigungsauge 4, der Kopplungseinrichtung 5 und den Gleitzonen 20, insbesondere deren Abstand a derart ausgelegt, dass das Befestigungsauge 4 sowohl in Axialrichtung 100 als auch in Radialrichtung 101 spielfrei, d. h. in jedem Fall federvorgespannt gelagert ist. Hierdurch werden Klappergeräusche zuverlässig vermieden.

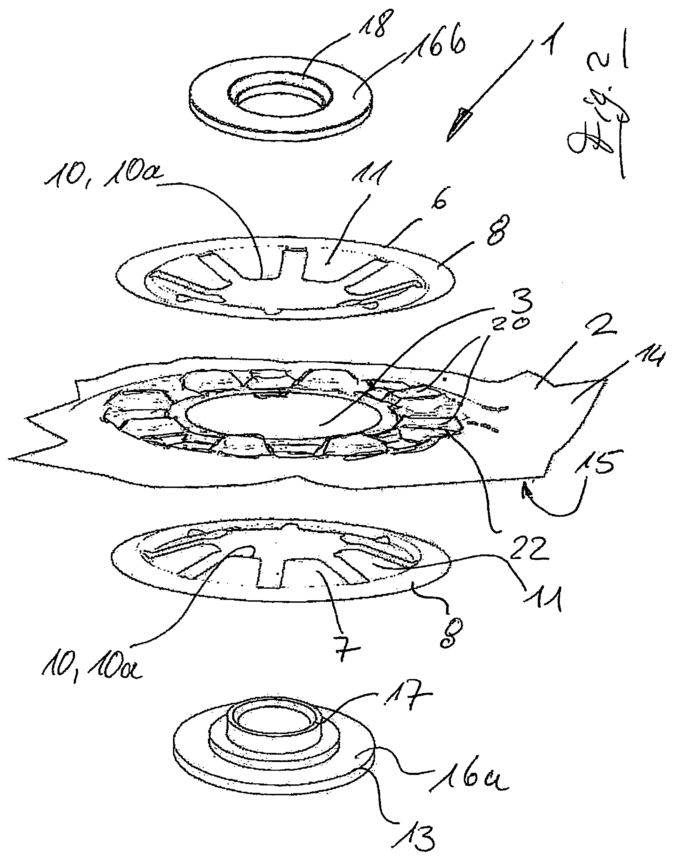

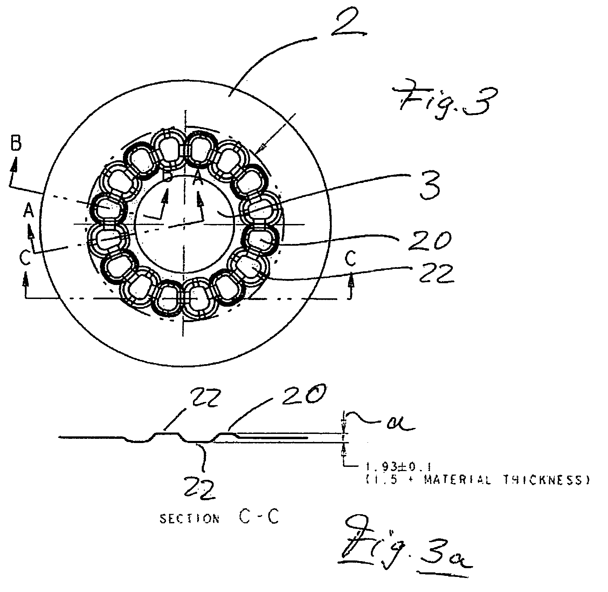

Das Abschirmelement 2 ist in der Darstellung gemäß Figur 1 stark schematisiert dargestellt. Im Folgenden wird anhand der Figur 2 und anhand der Figuren 3, 3a erläutert, wie ggf. der Abstand a bei Bedarf vorbestimmt eingestellt werden kann.

In der Darstellung gemäß Figur 2 ist die erfindungsgemäße Abschirmvorrichtung 1 ausschnittsweise in einer Explosionsdarstellung dargestellt. Das Abschirmelement 2 besitzt in der Umgebung der Befestigungsausnehmung 3 die Befestigungsausnehmung 3 umgebend höckerartige Durchsetzungen 23, welche beispielsweise abwechselnd aus der Blechebene des Abschirmelements 2 zur ersten Außenseite 14 und zur zweiten Außenseite 15 erhaben ausgebildet sind. Hierdurch entstehen über den Umfang verteilt Gleitzonen 20, die aus der ersten Außenseite 14 hervorstehen und gegenüberliegend ebenso Gleitzonen 20, die aus der zweiten Außenseite 15 etwas hervorstehen. Diese Gleitzonen 20 dienen zur Auflage der Federringe 8 der ersten Federscheibe 6 und der zweiten Federscheibe 7. Hierdurch gelingt es in einfacher Art und Weise beispielsweise bei einem einlagigen besonders dünnen Abschirmelement 2, welches beispielsweise aus einem 0,3 mm bis 1,5 mm starken Aluminiumblech gefertigt ist, den wirksamen Abstand a, der die Federscheiben 6, 7 vorspannt zu vergrößern. Gängige Werte für den Abstand a sind beispielsweise 1,5 mm bis 3,5 mm, wobei diese Maße je nach Einsatzzweck und je nach Art und Weise der gewünschten Federvorspannung in weiten Grenzen anpassbar sind. Die Erfindung kann mit Vorteil auch bei zwei- oder mehrlagigen Abschirmvorrichtungen eingesetzt werden, wobei für Einzellagen Blech-/Foliendicken bis hinunter zu 0,1 mm möglich sind.

Die Durchsetzungen 22, 23 (können wie in der Figur 2 dargestellt etwa höckerförmig sein oder wie in Figur 3 darstellt auch noppenförmig ausgebildet sein. Des Weiteren können die Gleitzonen 20 wie in Figur 2 und 3 dargestellt kleine ebene Auflageflächen auf den Durchsetzungen 22, 23 sein. Gleichwohl ist es auch möglich, die Durchsetzungen 22, 23 kalottenartig auszubilden, so dass gewölbte Auflageflächen für die Federscheiben 6, 7 gebildet sind. Hierdurch findet lediglich eine punktuelle Auflage der Federringe 8 auf den kalottenartigen Durchsetzungen 22 statt, so dass nur ein geringer Wärmeübergang von dem Abschirmelement 2 über die Kopplungseinrichtung 5 hin zum Befestigungsauge 4 erfolgt.

Das Vorsehen der Durchsetzungen 22, 23, sei es in höckerförmiger oder kalottenförmiger oder zinnenförmiger oder dergleichen Ausgestaltung hat den Vorteil, dass die Umgebung der Befestigungsausnehmung 3 lokal versteift wird. Hierdurch ist eine erhöhte Schwingungsfestigkeit gegeben und eine Rissbildung des Materials des Abschirmelements 2 in der direkten Umgebung um das Befestigungsauge 4 zuverlässig verhindert. Des Weiteren wird bei der erfindungsgemäßen Vorrichtung die gesamte Presskraft, die durch eine Verschraubung des Befestigungsauges 4 am Befestigungspartnerteil erforderlich ist vom Abschirmelement 2 ferngehalten. Damit ist auch bei einem beispielsweise falschen Anzugsdrehmoment, wie es im Werkstattalltag beispielsweise bei Reparaturen vorkommen kann, eine mechanische Überlastung des Abschirmelements 2 in der Umgebung der Befestigungsausnehmung 3 zuverlässig ausgeschlossen.

Im Ergebnis ist mit der erfindungsgemäßen Abschirmvorrichtung aufweisend die erfindungsgemäße Befestigungseinrichtung eine Abschirmeinrichtung geschaffen, die hohen mechanischen Beanspruchungen, insbesondere Schwingungsbeanspruchungen standhält und aufgrund der federnd vorgespannten Lagerung des Befestigungsauges 4 insbesondere auch klapperfrei und zwar dauerhaft klapperfrei ausgebildet ist.

Durch die schwingende Lagerung des Abschirmelements 2 gegenüber dem Befestigungspartnerteil (nicht gezeigt) ist das Geräuschniveau deutlich herabgesetzt, welches ggf. durch Eigenschwingungen eines starr befestigten Abschirmelements entstehen könnte.

Zudem ist die konstruktive Freiheit bei der Auslegung der Befestigungslösung erreicht, da insbesondere durch eine Auswahl geeigneter Federscheiben und/oder eine geeignete Auswahl der Geometrie des Abschirmelements in der Umgebung der Befestigungsausnehmung eine hohe Konstruktionsfreiheit gewährleistet ist.

Des Weiteren ist die erfindungsgemäße Abschirmvorrichtung kostengünstig, insbesondere aus einfach herzustellenden und in großer Stückzahl verfügbaren Teilen herstellbar.

In einer weiteren Ausbildung der Erfindung kann durch die schwingungstechnische Auslegung der Federscheiben 6 und 7 oder der Geometrien der Gleitzonen 20 auch eine befestigungspunktspezifische Schwingungs- und Wärmeleitungsverhalten eingestellt werden. Innerhalb einer Abschirmvorrichtung 1 mehrere unterschiedlich ausgelegte Befestigungspunkte realisierbar sind. So kann beispielsweise ein Befestigungspunkt mit höherer Federvorspannung und einer zweiter mit geringerer Federvorspannung ausgebildet sein und somit auf die lokal auftretenden Schwingungsbeanspruchungen optimal abgestimmt werden. Bei der Ausführungsform gemäß Figur 1 findet eine Linienberührung der Federscheiben 6, 7 mit den Gleitzonen 20 statt. Eine solche Linienberührung oder eine wie oben beschriebene punktuelle Berührung reduziert den Wärmeübergang vom Abschirmelement 2 hin zum Befestigungsauge 4 signifikant.

Ein weiterer wesentlicher Vorteil der Erfindung ist, dass das Befestigungsauge 4 ggü. dem Abschirmelement 2 mit einer geringen und insbesondere definierten und innerhalb des Verschiebebereichs konstanten oder nahezu konstanten Verlagerungskraft verschiebbar ist. Ein weiterer Vorteil ist, dass die Umgebung der Befestigungsausnehmung insbesondere bei der Ausgestaltung mittels Durchsetzungen 22 eine erhöhte Steifigkeit besitzt.

Insbesondere hat sich herausgestellt, dass das vorgeschlagene Konstruktionsprinzip zur Anbindung des Befestigungsauges 4 am Abschirmelement 2 bei Abschirmelementen 2 aus Aluminiumblechen besonders vorteilhaft einsetzbar ist, da die Rissgefahr deutlich minimiert ist. Selbstverständlich ist es allerdings auch möglich sowohl Abschirmelemente 2 aus Stahl auszubilden wie auch ein- oder mehrlagige Abschirmbleche zu verwenden. Dabei kann es zweckmäßig sein, zwischen zwei Abschirmelementlagen ein Isoliermaterial, z. B. ein Textil, vorzusehen. Die Isoliermateriallage ist im Umgebungsbereich um die Befestigungsausnehmung, in dem die Durchsetzungen vorliegen, bevorzugt ausgespart.

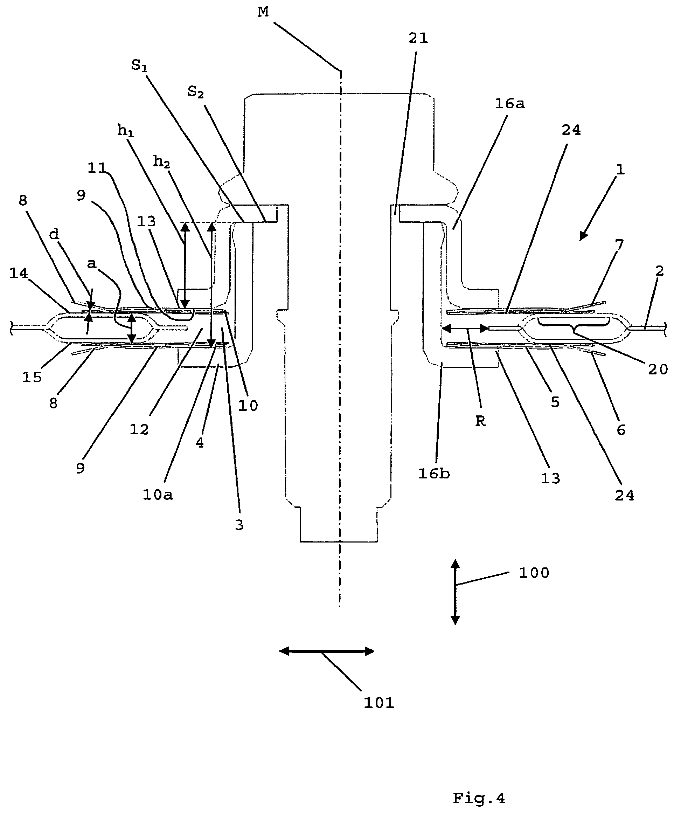

Die Figur 4 zeigt eine weitere Ausführungsform der erfindungsgemäßen Abschirmvorrichtung. Auch diese Ausführungsform weist ein Abschirmelement 2 auf. In einer Befestigungsausnehmung 3 des Abschirmelements 2 ist ein Befestigungsauge 4 angeordnet. Das Befestigungsauge 4 besteht aus zwei Scheibenelementen 16a, 16b, die bei dieser Ausführungsform becherartig ausgestaltet sind. Insbesondere weist das Scheibenelement 16a im Querschnitt eine S-Form und das Scheibenelement 16b eine L-Form auf. Diese Ausgestaltung der Scheibenelemente 16a, 16b ist unabhängig von allen weiteren Merkmalen und könnte somit auch an Stelle der in Figur 1 dargestellten Scheibenelemente 16a, 16b in der dort dargestellten Ausführungsform zur Anwendung kommen.

Das eine Scheibenelement 16a, welches bei bestimmungsgemäßem Gebrauch das andere Scheibenelement 16b aufnimmt, weist eine erste Höhe h₁, gemessen zwischen der Fläche, an der bei bestimmungsgemäßem Gebrauch eine zweite Federscheibe 7 anliegt, und einer zweiten Stirnfläche S₂, an der bei bestimmungsgemäßem Gebrauch eine erste Stirnfläche S₁ des Scheibenelements 16b anliegt, auf. Das Scheibenelement 16b weist eine zweite Höhe h₂ auf, gemessen zwischen der Fläche, an der bei bestimmungsgemäßem Gebrauch eine erste Federscheibe 6 anliegt, und der ersten Stirnfläche S₁.

Bei bestimmungsgemäßem Gebrauch liegen die Stirnflächen S1 und S2 durch die von der Schraube ausgeübte Kraft in Axialrichtung aneinander und die Scheibenelemente 16a, 16b gehen in Axialrichtung 100 auf Block. Die Differenz der Höhen h₁ und h₂ bestimmt dadurch direkt die durch die Federscheiben 6, 7 ausgeübte Federkraft, wodurch diese durch eine Anpassung der Höhen h₁ und/oder h₂ variiert werden kann. Die zwei Scheibenelemente 16a, 16b können beispielsweise mittels einer Schnappverbindung oder durch Klemmung miteinander verbunden werden.

Die Federscheiben 6, 7 der in der Figur 4 dargestellten Ausführungsform unterscheiden sich ebenfalls von den in der Figur 1 dargestellten Federscheiben 6, 7. Die Verwendung der in der Figur 4 gezeigten Federscheiben 6, 7 wäre jedoch auch in der Ausführungsform der Figur 1 an Stelle der dort dargestellten Federscheiben 6, 7 möglich. Die Ausbildung der Federscheiben 6, 7 ist unabhängig von den weiteren Merkmalen der erfindungsgemäßen Abschirmvorrichtung.

Die Federscheiben 6, 7 der Ausführungsform gemäß Figur 4, die gemeinsam die Kopplungseinrichtung 5 dieser Ausführungsform bilden, besitzen einen radial äußeren umlaufenden Federring 8, von dem sich radial nach innen auf die Mittelachse M hinweisend eine Vielzahl von Federarmen 9 erstrecken. Bei der Ausführungsform gemäß Figur 4 berühren sich die freien Enden 10a der Federscheiben 6, 7 im montierten Zustand nicht. Vielmehr weisen die freien Enden 10 der Federscheiben 6, 7 einen Abstand zueinander auf. Die Federscheiben 6, 7 der in Figur 4 dargestellten Ausführungsform sind wesentlich flacher ausgebildet als die Federscheiben 6, 7 der in Figur 1 dargestellten Ausführungsform.

Zwischen der ersten Federscheibe 6 und der Gleitzone 20 der zweiten Außenseite 15 ist eine Zwischenlage angeordnet, die bei dieser Ausführungsform als im Wesentlichen ringförmiges Zwischenelement 24 ausgebildet ist. Ein weiteres Zwischenelement 24 ist zwischen der zweiten Federscheibe 7 und der Gleitzone 20 der ersten Außenseite 14 angeordnet.

Auch die in der Figur 1 dargestellte Ausführungsform könnte mit einer Zwischenlage, insbesondere einem Zwischenelement 24 ausgestattet sein, wobei der Innendurchmesser D₁ eines ringförmigen Zwischenelements 24 dann relativ zu dem Durchmesser D₂ der Befestigungsausnehmung 3 deutlich größer gewählt werden müsste, da das Zwischenelement 24 in radialer Richtung zur Mittelachse M vorteilhafterweise nicht bis zu dem Punkt reichen sollte, an dem sich die Federscheiben 6, 7 berühren.

In einer Nulllage, in der die Scheibenelemente 16a, 16b, die Federscheiben 6, 7, die Zwischenelemente 24 und die Befestigungsausnehmung 3 konzentrisch angeordnet sind weist das Befestigungsauge 4 in Radialrichtung 101 ein Radialspiel R auf, welches durch die Differenz zwischen dem Durchmesser D₂ der Befestigungsausnehmung 3 und dem Außendurchmesser D₃ des Scheibenelements 16b bestimmt wird. Vorzugsweise ist der Durchmesser D₂ der Befestigungsausnehmung 3 so ausgewählt, dass sich die Abschirmelemente 2 und die Scheibenelemente 16a, 16b in der Nulllage in Axialrichtung 100 überlappen. Die Ausdehnung der Gleitzonen 20 in Radialrichtung 101 entspricht ausgehend von dem Auflagepunkt der Federscheiben 6, 7 in der Gleitzone 20 in Nulllage zumindest dem Radialspiel R sowohl zur Mittelachse M hin als auch von dieser weg. Bei bestimmungsgemäßem Gebrauch kann sich das Befestigungsauge 4 relativ zu den Abschirmelementen 2 soweit verlagern, dass der zur Mittelachse weisende Rand der Abschirmelemente 2 an das Scheibenelement 16b stößt. Die Federscheiben 6, 7 und die Zwischenelemente 24 haben sich dann entsprechend in den Gleitzonen 20 verschoben, weshalb die oben beschriebene Ausführung der Gleitzonen 20 vorteilhaft ist, damit ein Abrutschen der Federscheiben 6, 7 und/oder der Zwischenelemente 24 von den Gleitzonen 20 verhindert werden kann.

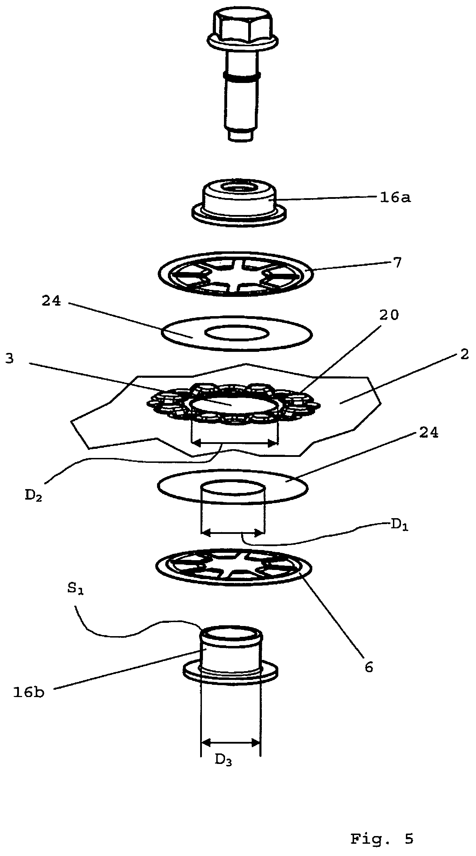

Die Figur 5 zeigt eine Explosionsdarstellung des Verbunds aus Abschirmelement 2, Zwischenelementen 24, Federscheiben 6, 7 und Scheibenelementen 16a, 16b sowie einer Schraube, mittels der die Abschirmvorrichtung 1 an einem Befestigungspartnerteil (nicht dargestellt) befestigbar ist. Das Abschirmelement 2 ist mit erhabenen Bereichen in der Umgebung der Befestigungsausnehmung 3 versehen, die Gleitzonen 20 bilden. Die Federscheiben 6, 7 wirken mittels den Zwischenelementen 24 mit den Gleitzonen 20 zusammen und erzeugen so eine Reibkraft.

### Bezugszeichen

- 1: Abschirmvorrichtung
- 2: Abschirmelemente
- 3: Befestigungsausnehmung
- 4: Befestigungsauge
- 5: Kopplungseinrichtung
- 6: erste Federscheibe
- 7: zweite Federscheibe
- 8: Federring
- 9: Federarme
- 10: radial inneres Ende
- 10a: freie Enden
- 11: Federarmschenkel
- 12: Radialnut
- 13: Nutkanten
- 14: erste Außenseite
- 15: zweite Außenseite
- 16a, 16b: Scheibenelemente
- 17: Stemmkragen
- 18: Fase
- 20: Gleitzonen
- 21: Lochausnehmung
- 22: Durchsetzungen
- 23: Durchsetzungen
- 24: Zwischenelement
- 100: Axialrichtung
- 101: Radialrichtung
- a: Abstand
- d: Dicke
- D₁: Innendurchmesser
- D₂: Durchmesser
- D₃: Außendurchmesser
- h₁: erste Höhe
- h₂: zweite Höhe
- M: MittelachseR Radialspiel
- S₁: erste Stirnseite
- S₂: zweite Stirnseite

## Patentansprüche

1. Abschirmvorrichtung mit einem Abschirmelement (2) mit zumindest einem Befestigungsauge (4) zur Befestigung der Abschirmvorrichtung (1) an einem Befestigungspartnerteil und zur Aufnahme eines Befestigungsmittels, wobei das Befestigungsauge (4) in einer Befestigungsausnehmung (3) der Abschirmvorrichtung (1) verschieblich gelagert sitzt, wobei das Befestigungsauge (4) mittels einer federnd ausgebildeten Kopplungseinrichtung (5) in einer Axialrichtung (100) federnd relativ zum Abschirmelement (2) gelagert und in zumindest einer Radialrichtung (101) reibkraftbeaufschlagt relativ zum Abschirmelement (2) innerhalb der Befestigungsausnehmung (3) verlagerbar ist, wobei zur Reibkrafterzeugung radial äußere Bereiche der Kopplungseinrichtung (5) federnd vorgespannt mit Gleitzonen (20) von gegenüberliegenden Außenseiten (14, 15) des Abschirmelements (2) zusammenwirken, **dadurch gekennzeichnet, dass** die Gleitzonen (20) aus erhabenen Bereichen in der Umgebung der Befestigungsausnehmungen (3) gebildet sind

2. Abschirmvorrichtung nach Anspruch 1, **dadurch gekennzeichnet, dass** die radial äußeren Bereiche der Kopplungseinrichtung (5) mit den Gleitzonen (20) von gegenüberliegenden Außenseiten (14, 15) des Abschirmelements (2) über unmittelbaren Kontakt zueinander oder mittelbar über zumindest eine Zwischenlage zusammenwirken.

3. Abschirmvorrichtung nach Anspruch 1 oder 2, **dadurch gekennzeichnet, dass** die Kopplungseinrichtung (5) aus zwei Federscheiben (6, 7) gebildet ist, die mit radial inneren Enden (10) von Federarmen (9) in einer Nut (12) des Befestigungsauges (4) gelagert sind.

4. Abschirmvorrichtung nach einem der vorangegangenen Ansprüche, **dadurch gekennzeichnet, dass** die erhabenen Bereiche im Wesentlichen zinnenförmige oder kalottenförmige Durchsetzungen umlaufend um die Befestigungsausnehmung (3) sind.

5. Abschirmvorrichtung nach einem der vorangegangenen Ansprüche, **dadurch gekennzeichnet, dass** die Befestigungsausnehmung (3) ein Langloch ist, in dem das Befestigungsauge (4) in zumindest einer Radialrichtung (101) verschieblich gelagert ist.

6. Abschirmvorrichtung nach einem der vorangegangenen Ansprüche, **dadurch gekennzeichnet, dass** die Federscheiben (6, 7) radial äußere Ringe (8) aufweisen, wobei im montierten Zustand die radial äußeren Ringe (8) auf den Gleitzonen (20) aufliegen und federvorgespannt das Abschirmelement (2) zangenartig halten.

7. Abschirmvorrichtung nach einem der vorangegangenen Ansprüche, **dadurch gekennzeichnet, dass** die Zwischenlage zwischen zumindest einem radial äußeren Bereich der Kopplungseinrichtung (5) und der Gleitzone (20) der gegenüber liegenden Außenseite (14, 15) des Abschirmelements (2) angeordnet ist.

8. Abschirmvorrichtung nach Anspruch 6, **dadurch gekennzeichnet, dass** die Zwischenlage als kreisförmiges, scheibenartiges Zwischenelement (24) ausgebildet ist, wobei das Zwischenelement (24) eine Öffnung zur Aufnahme des Befestigungsmittels aufweist, die mit einer Lochausnehmung (21) des Befestigungsauges (4) fluchtet.

9. Abschirmvorrichtung nach Anspruch 6 oder 7, **dadurch gekennzeichnet, dass** die Zwischenlage aus Edelstahl und/oder Federstahl besteht und/oder eine Dicke d aufweist, die 0,01mm ≤ d ≤ 0, 5mm und insbesondere 0,05mm ≤ d ≤ 0,1mm beträgt.

10. Abschirmvorrichtung nach einem der vorangegangenen Ansprüche, **dadurch gekennzeichnet, dass** eine Gleitbeschichtung, insbesondere eine MoS2-Beschichtung auf den Außenseiten (14, 15) des Abschirmelements (2) und/oder auf der Zwischenlage und/oder auf den Federscheiben (6, 7) vorgesehen ist.

11. Abschirmvorrichtung nach einem der vorangegangenen Ansprüche, **dadurch gekennzeichnet, dass** ein axialer Abstand (a) der Gleitzonen (20) und/oder die Raumformen der Durchsetzungen an unterschiedlichen Befestigungspunkten des Abschirmelementes (2) unterschiedlich sind.

12. Abschirmvorrichtung nach einem der vorangegangenen Ansprüche, **dadurch gekennzeichnet, dass** das Befestigungsauge (4) aus zumindest zwei zueinander verstemmten Scheibenelementen (16a, 16b) gebildet ist.

13. Abschirmvorrichtung nach einem der vorangegangenen Ansprüche, **dadurch gekennzeichnet, dass** sich die Federarme (9) vom radial äußeren Federring (8) nach innen erstrecken und sich endseitig berühren und/oder an Begrenzungskanten (13) der Nut (12) anliegen.

14. Abschirmvorrichtung nach einem der vorangegangenen Ansprüche, **dadurch gekennzeichnet, dass** das Befestigungsauge (4) im Bereich der Befestigungsausnehmung (3) in etwa in der Ebene des Abschirmelementes (2) angeordnet ist und zur Bildung der Kopplungseinrichtung (5) zwei identische Federscheiben (6, 7) verwendet werden.

15. Abschirmvorrichtung nach einem der vorangegangenen Ansprüche, **dadurch gekennzeichnet, dass** sich die Federscheiben (6, 7) zur Bildung des Kopplungselementes hinsichtlich ihrer Raumform, insbesondere hinsichtlich der Geometrie der Federarme (9) wie auch hinsichtlich der Materialstärke, der Federhärte und/oder der Länge der Federarme (9) unterscheiden.

## Claims

1. A shielding device with a shielding element (2) having at least one fastening eye (4) for fastening the shielding device (1) to a fastening partner piece and for accommodating a fastener; the fastening eye (4) is supported so that it is able to move in a fastening recess (3) of the shielding device (1),
whereas the fastening eye (4) is supported so that it is able to flex in an axial direction (100) relative to the shielding element (2) by means of a flexibly embodied coupling device (5) and when acted on by friction force, is able to move in the fastening recess (3) at least in a radial direction (101) relative to the shielding element (2), with the friction force being generated by radially outer regions of the coupling device (5) cooperating in a resiliently prestressed fashion with sliding zones (20) of opposing outsides (14, 15) of the shielding element (2), **characterized in that** the sliding zones (20) are composed of raised regions in the vicinity of the fastening recesses (3).

2. The shielding device according to claim 1, **characterized in that** the radially outer regions of the coupling device (5) cooperate with the sliding zones (20) of opposing outsides (14, 15) of the shielding element (2) through direct contact with each other or indirectly via at least one intermediate layer.

3. The shielding device according to claim 1 or 2, **characterized in that** the coupling device (5) is composed of two spring washers (6, 7) that are supported with radially inner ends (10) of spring arms (9) in a groove (12) of the fastening eye (4).

4. The shielding device according to one of the preceding claims, **characterized in that** the raised regions are essentially crenelated or dome-shaped beads extending around the fastening recess (3).

5. The shielding device according to one of the preceding claims, **characterized in that** the fastening recess (3) is an oblong hole in which the fastening eye (4) is supported so that it is able to move at least in a radial direction (101).

6. The shielding device according to one of the preceding claims, **characterized in that** the spring washers (6, 7) have radially outer rings (8) and in the installed state, the radially outer rings (8) rest against the sliding zones (20) and in a resiliently prestressed way, hold the shielding element (2) in a plier-like fashion.

7. The shielding device according to one of the preceding claims, **characterized in that** the intermediate layer is positioned between a radially outer region of the coupling device (5) and the sliding zone (20) of the opposing outside (14, 15) of the shielding element (2).

8. The shielding device according to claim 6, **characterized in that** the intermediate layer is embodied in the form of a circular, disc-like intermediate element (24) and the intermediate element (24) has an opening for accommodating the fastener, which opening is aligned with a hole-recess (21) of the fastening eye (4).

9. The shielding device according to claim 6 or 7, **characterized in that** the intermediate layer is composed of stainless steel and/or spring steel and/or has a thickness d that is defined by 0.01 mm ≤d ≤0.5 mm and in particular 0.05 mm ≤d ≤0.1 mm.

10. The shielding device according to one of the preceding claims, **characterized in that** a sliding coating, in particular a MoS2 coating, is provided on the outsides (14, 15) of the shielding element (2) and/or on the intermediate layer and/or on the spring washers (6, 7).

11. The shielding device according to one of the preceding claims, **characterized in that** an axial distance (a) of the sliding zones (20) and/or the shapes of the beads are different at different fastening points of the shielding element (2).

12. The shielding device according to one of the preceding claims, **characterized in that** the fastening eye (4) is composed of at least two disc elements (16a, 16b) that are caulked to each other.

13. The shielding device according to one of the preceding claims, **characterized in that** the spring arms (9) extend inward from the radially outer spring ring (8) and touch each other at the ends and/or rest against the boundary edges (13) of the groove (12).

14. The shielding device according to one of the preceding claims, **characterized in that** the fastening eye (4) is situated in the vicinity of the fastening recess (3), approximately in the plane of the shielding element (2) and two identical spring washers (6, 7) are used to produce the coupling device (5).

15. The shielding device according to one of the preceding claims, **characterized in that** in order to form the coupling element, the spring washers (6, 7) differ in terms of their shape and particularly with regard to the geometry of the spring arms (9) and with regard to the material thickness, the spring stiffness, and/or length of the spring arms (9).

## Revendications

1. Dispositif de protection comportant un élément de protection (2) pourvu d'au moins un oeillet de fixation (4) pour fixer le dispositif de protection (1) sur un élément de fixation complémentaire et pour recevoir un moyen de fixation, l'oeillet de fixation (4) étant monté avec faculté de translation dans un évidement de fixation (3) du dispositif de protection (1), dans lequel l'oeillet de fixation (4) est monté élastiquement par rapport à l'élément de protection dans une direction axiale (100) au moyen d'un ensemble de couplage (5) réalisé élastique et est mobile par rapport à l'élément de protection (2) à l'intérieur de l'évidement de fixation (3) en étant sollicité par une force de friction dans au moins une direction radiale (101), et pour générer la force de friction, des zones radialement extérieures de l'ensemble de couplage (5) coopèrent avec des zones de coulissement (20) des faces extérieures opposées (14, 15) de l'élément de protection (2) en étant élastiquement précontraintes, **caractérisé en ce que** les zones de coulissement (20) sont formées par des zones surélevées aux alentours des évidements de fixation (3).

2. Dispositif de protection selon la revendication 1, **caractérisé en ce que** les zones radialement extérieures de l'ensemble de couplage (5) coopèrent avec les zones de coulissement (20) de faces extérieures opposées (14, 15) de l'élément de protection (2) par un contact direct entre eux ou indirectement par au moins une couche intermédiaire.

3. Dispositif de protection selon la revendication 1 ou 2, **caractérisé en ce que** l'ensemble de couplage (5) est formé par deux rondelles élastiques (6, 7) qui sont montées dans une gorge (12) de l'oeillet de fixation (4) par des extrémités (10) radialement intérieures (10) de bras élastiques (9).

4. Dispositif de protection selon l'une des revendications précédentes, **caractérisé en ce que** les zones surélevées sont des traversées sensiblement en forme de créneaux ou de calottes entourant l'évidement de fixation (3).

5. Dispositif de protection selon l'une des revendications précédentes, **caractérisé en ce que** l'évidement de fixation (3) est un trou oblong dans lequel l'oeillet de fixation (4) est monté avec faculté de translation au moins dans une direction radiale (101).

6. Dispositif de protection selon l'une des revendications précédentes, **caractérisé en ce que** les rondelles élastiques (6, 7) présentent des anneaux (8) radialement extérieurs, et dans l'état monté les anneaux (8) radialement extérieurs reposent sur les zones de coulissement (20) et retiennent à la manière d'une pince l'élément de protection (2) avec précontrainte élastique.

7. Dispositif de protection selon l'une des revendications précédentes, **caractérisé en ce que** la couche intermédiaire est agencée entre au moins une zone radialement extérieure de l'ensemble de couplage (5) et la zone de coulissement (20) de la face extérieure opposée (14, 15) de l'élément de protection (2).

8. Dispositif de protection selon la revendication 6, **caractérisé en ce que** la couche intermédiaire est réalisé sous forme d'élément intermédiaire (24) circulaire en forme de disque, l'élément intermédiaire (24) présentant un orifice pour recevoir le moyen de fixation, qui est en alignement avec un trou (21) de l'oeillet de fixation (4).

9. Dispositif de protection selon la revendication 6 ou 7, **caractérisé en ce que** la couche intermédiaire est constituée en acier inoxydable et/ou en acier ressort et/ou présente une épaisseur d qui est de 0,01 mm ≤ d ≤ 0,5 mm et en particulier de 0,05 mm ≤ d ≤ 0,1 mm.

10. Dispositif de protection selon l'une des revendications précédentes, **caractérisé en ce qu'**un revêtement glissant, en particulier un revêtement MoS2, est prévu sur les faces extérieures (14, 15) de l'élément de protection (2) et/ou sur la couche intermédiaire et/ou sur les rondelles élastiques (6, 7).

11. Dispositif de protection selon l'une des revendications précédentes, **caractérisé en ce qu'**une distance axiale (a) des zones de coulissement (20) et/ou les formes spatiales des traversées aux différents points de fixation de l'élément de protection (2) se distinguent.

12. Dispositif de protection selon l'une des revendications précédentes, **caractérisé en ce que** l'oeillet de fixation (4) est formé par au moins deux éléments de disque (16a, 16b) matés l'un contre l'autre.

13. Dispositif de protection selon l'une des revendications précédentes, **caractérisé en ce que** les bras élastiques (9) s'étendent depuis l'anneau élastique (8) radialement extérieur vers l'intérieur et se touchent du côté extrémité et/ou s'appuient contre des arêtes de délimitation (13) de la gorge (12).

14. Dispositif de protection selon l'une des revendications précédentes, **caractérisé en ce que** l'oeillet de fixation (4) est agencé au niveau de l'évidement de fixation (3) approximativement dans le plan de l'élément de protection (2), et **en ce que** deux rondelles élastiques (6, 7) identiques sont utilisées pour former l'ensemble de couplage (5).

15. Dispositif de protection selon l'une des revendications précédentes, **caractérisé en ce que** les rondelles élastiques (6, 7) pour former l'élément de couplage se distinguent à l'égard de leur forme spatiale, en particulier à l'égard de la géométrie des bras élastiques (9) ainsi qu'à l'égard de l'épaisseur, de la raideur et/ou de la longueur des bras élastiques (9).
